(19) **Europäisches Patentamt / European Patent Office / Office européen des brevets**

(11) **EP 4 707 105 A1**

(12) **EUROPEAN PATENT APPLICATION**
published in accordance with Art. 153(4) EPC

(43) Date of publication:
**11.03.2026 Bulletin 2026/11**

(21) Application number: **24847869.5**

(22) Date of filing: **25.06.2024**

(51) International Patent Classification (IPC):
**B60W 30/18** (2012.01)

(52) Cooperative Patent Classification (CPC):
Y02T 10/72

(86) International application number:
**PCT/CN2024/101173**

(87) International publication number:
**WO 2025/025907 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.08.2023 CN 202310971225**

(71) Applicants:
• **ZHEJIANG ZEEKR INTELLIGENT TECHNOLOGY CO., LTD.**
**Ningbo, Zhejiang 315899 (CN)**

• **VIRIDI E-MOBILITY TECHNOLOGY (NINGBO) CO., LTD.**
**Ningbo, Zhejiang 315336 (CN)**
• **Zhejiang Geely Holding Group Co., Ltd.**
**Hangzhou, Zhejiang 310051 (CN)**

(72) Inventors:
• **YE, Xianjun**
**Ningbo, Zhejiang 315899 (CN)**
• **LV, Jiaxin**
**Ningbo, Zhejiang 315899 (CN)**

(74) Representative: **Michalski Hüttermann & Partner Patentanwälte mbB**
**Kaistraße 16A**
**40221 Düsseldorf (DE)**

(54) **ANTI-SKID CONTROL FOR VEHICLE**

(57) An anti-slip control method and system for a vehicle, a vehicle, and a computer-readable storage medium. The anti-slip control method for the vehicle includes: obtaining an actual speed of a motor in the vehicle (S1); determining a target speed of the motor in the vehicle (S2); determining a slip state of wheels of the vehicle with respect to a current road surface according to the actual speed and the target speed of the motor (S3); and determining a current adjustment amount for an actual torque of the motor in the vehicle according to the slip state of the wheels of the vehicle with respect to the current road surface, and determining an adjusted driving torque of the motor according to the current adjustment amount, so as to adjust the actual speed of the motor in the vehicle, enabling the actual speed of the motor to reach the target speed of the motor (S4). The method has a fast and accurate recognition process, a short active anti-slip control link, a short control period, and a better anti-slip control effect.

OBTAIN AN ACTUAL SPEED OF A MOTOR IN THE VEHICLE — S1

OBTAIN A CURRENT VEHICLE SPEED OF THE VEHICLE — S21

DETERMINE AN ACTUAL SLIP RATE OF THE VEHICLE ACCORDING TO THE ACTUAL SPEED OF THE MOTOR AND THE CURRENT VEHICLE SPEED — S22

OBTAIN AN ACTUAL UTILIZATION ADHESION COEFFICIENT OF THE VEHICLE — S23

DETERMINE AN OPTIMAL SLIP RATE OF THE VEHICLE ACCORDING TO THE ACTUAL SLIP RATE AND THE ACTUAL UTILIZATION ADHESION COEFFICIENT — S24

DETERMINE THE TARGET SPEED OF THE MOTOR IN THE VEHICLE ACCORDING TO THE OPTIMAL SLIP RATE OF THE VEHICLE — S25

(S21–S25 = S2)

DETERMINE A SLIP STATE OF THE VEHICLE ACCORDING TO THE ACTUAL SPEED OF THE MOTOR AND THE TARGET SPEED OF THE MOTOR — S3

DETERMINE A CURRENT ADJUSTMENT AMOUNT FOR A DRIVING TORQUE OF THE MOTOR IN THE VEHICLE ACCORDING TO THE SLIP STATE OF THE VEHICLE, AND ADJUST THE ACTUAL SPEED OF THE MOTOR TO REACH THE TARGET SPEED OF THE MOTOR BY DETERMINING AN ADJUSTED DRIVING TORQUE OF THE MOTOR ACCORDING TO THE CURRENT ADJUSTMENT AMOUNT — S4

**FIG. 1**

EP 4 707 105 A1

## Description

### CROSS-REFERENCE TO RELATED APPLICATIONS

The present disclosure claims the benefit of priority to Chinese Patent Application No. 202310971225.0, filed with the China National Intellectual Property Administration on August 03, 2023, which is incorporated herein by reference in its entirety.

### TECHNICAL FIELD

Embodiments of the present disclosure relate to, but are not limited to, the field of vehicle technologies, and relate in particular to, but are not limited to, an anti-slip control method and system for a vehicle, a vehicle, and a computer-readable storage medium.

### BACKGROUND

When a vehicle encounters a low-adhesion road surface during operation, a phenomenon of excessive wheel slip or spin easily occurs, which greatly affects stability and safety of the vehicle, and also affects acceleration performance and deceleration braking capability of the vehicle.

### SUMMARY

The following is a brief summary of subject matter that is described in detail herein. This summary is not intended to be limiting as to the scope of the claims. The present disclosure provides an anti-slip control method and system for a vehicle, a vehicle and a computer-readable storage medium, which can meet requirements for wheel anti-slip control of the vehicle.

The present disclosure provides an anti-slip control method for a vehicle, including:

obtaining an actual speed of a motor in the vehicle;
obtaining a current vehicle speed of the vehicle;
determining an actual slip rate of the vehicle according to the actual speed of the motor and the current vehicle speed;
obtaining an actual utilization adhesion coefficient of the vehicle;
determining an optimal slip rate of the vehicle according to the actual slip rate and the actual utilization adhesion coefficient;
determining a target speed of the motor in the vehicle according to the optimal slip rate of the vehicle;
determining a slip state of the vehicle according to the actual speed of the motor and the target speed of the motor; and
determining a current adjustment amount for a driving torque of the motor in the vehicle according to the slip state of the vehicle, and enabling the actual speed of the motor in the vehicle to reach the target speed of the motor by determining an adjusted driving torque of the motor according to the current adjustment amount.

In some embodiments, obtaining the current vehicle speed of the vehicle includes:

obtaining speeds of wheels of the vehicle, an acceleration of a vehicle body of the vehicle, and an angle of a steering wheel of the vehicle; and
determining the current vehicle speed of the vehicle according to the speeds of the wheels, the acceleration of the vehicle body, and the angle of the steering wheel.

In some embodiments, determining the actual slip rate of the vehicle according to the actual speed of the motor and the current vehicle speed includes:
determining the actual slip rate of the vehicle according to a ratio of the actual speed of the motor to a product of the current vehicle speed and a gear-ratio of a drivetrain of the vehicle.

In some embodiments, obtaining the actual utilization adhesion coefficient of the vehicle includes:

obtaining a current vertical load and a current longitudinal driving force of the vehicle; and
determining the actual utilization adhesion coefficient of the vehicle according to a ratio of the current longitudinal driving force to the current vertical load of the vehicle.

In some embodiments, determining the optimal slip rate of the vehicle according to the actual slip rate and the actual utilization adhesion coefficient includes:

determining whether the actual slip rate is greater than a slip rate threshold;
in response to determining that the actual slip rate is less than the slip rate threshold, determining the actual slip rate as the optimal slip rate of the vehicle;
in response to determining that the actual slip rate is greater than the slip rate threshold, respectively determining a plurality of weight coefficients of a current road surface with respect to a plurality of standard road surfaces by comparing the actual slip rate and the actual utilization adhesion coefficient with pre-stored standard slip rates and standard utilization adhesion coefficients of the plurality of standard road surfaces; and
determining the optimal slip rate of the vehicle according to the plurality of weight coefficients of the current road surface with respect to the plurality of standard road surfaces.

In some embodiments, determining the optimal slip rate of the vehicle according to the plurality of weight coefficients of the current road surface with respect to the plurality of standard road surfaces includes:
determining a product of a standard slip rate of each of the plurality of standard road surfaces and a corresponding weight coefficient thereof, and determining, a ratio of a sum of the products for the plurality of standard road surfaces to a sum of the plurality of weight coefficients of the current road surface with respect to the plurality of standard road surfaces, as the optimal slip rate of the vehicle.

In some embodiments, determining the target speed of the motor in the vehicle according to the optimal slip rate of the vehicle includes:
determining the target speed of the motor in the vehicle according to the current vehicle speed, a gear-ratio of a drivetrain of the vehicle and the optimal slip rate.

In some embodiments, determining the target speed of the motor in the vehicle further includes:

determining a correction amount of the target speed of the motor according to a product of a change rate of the driving torque of the motor in the vehicle and a deformation coefficient of the drivetrain of the vehicle; and
correcting the target speed of the motor according to the correction amount of the target speed of the motor, to determine a corrected target speed of the motor as the target speed of the motor in the vehicle.

In some embodiments, determining the slip state of the vehicle according to the actual speed of the motor and the target speed of the motor includes:

determining a deviation value of the speed of the motor in the vehicle according to the target speed of the motor and the actual speed of the motor in the vehicle;
determining, according to the deviation value of the speed of the motor, a change rate of the deviation value; and
determining the slip state of the vehicle according to the deviation value of the speed of the motor and the change rate of the deviation value.

In some embodiments, determining the slip state of the vehicle according to the deviation value of the speed of the motor and the change rate of the deviation value includes one of:

in response to the deviation value being greater than 0 and the change rate of the deviation value being greater than or equal to 0, determining that the slip state is a slip increase state;
in response to the deviation value being greater than 0 and the change rate of the deviation value being less than 0, determining that the slip state is a slip recovery state;
in response to the deviation value being less than 0 and the change rate of the deviation value being greater than 0, determining that the slip state is a slip rise state;
in response to the deviation value being less than 0 and the change rate of the deviation value being greater than or equal to 0, determining that the slip state is the slip increase state; or
in response to the deviation value being equal to 0 and the change rate of the deviation value being any value, determining that the slip state is an optimal slip state.

In some embodiments, determining the current adjustment amount for the driving torque of the motor in the vehicle according to the slip state of the vehicle, and enabling the actual speed of the motor in the vehicle to reach the target speed of the motor by determining the adjusted driving torque of the motor according to the current adjustment amount includes:

determining the current adjustment amount for the driving torque of the motor in the vehicle according to the slip state of the vehicle;

determining, a minimum of a sum of a request torque of the motor in the vehicle and the current adjustment amount, and the request torque of the motor, as the adjusted driving torque of the motor; and

adjusting the actual speed of the motor in the vehicle to reach the target speed of the motor according to the adjusted driving torque of the motor.

In some embodiments, in response to the vehicle switching between different slip states, the method further includes:

configuring a switching initial value for the driving torque of the motor in response to the motor in the vehicle switching between the different slip states.

In some embodiments, configuring the switching initial value for the driving torque of the motor in response to the motor in the vehicle switching between the different slip states includes:

determining the switching initial value for the driving torque of the motor according to the adjusted driving torque of the motor at a time immediately before switching, a request torque of the motor during the switching, and a deviation value of the speed of the motor during the switching.

The present disclosure further provides a computer-readable storage medium having a program stored therein, wherein the program, when executed by one or more processors, implements the anti-slip control method for the vehicle according to any one of the above embodiments.

The present disclosure further provides an anti-slip control system for a vehicle, including one or more processors configured to implement the anti-slip control method for the vehicle according to any one of the above embodiments.

The present disclosure further provides a vehicle, including the anti-slip control system for the vehicle according to the above embodiment.

The anti-slip control method and system for the vehicle, the vehicle and the computer-readable storage medium are provided in the embodiments of the present disclosure. With the anti-slip control method for the vehicle, a slip state of the vehicle is determined by obtaining an actual speed of the motor in the vehicle and determining a target speed of the motor in the vehicle, and then a current adjustment amount for a driving torque of the motor in the vehicle is further determined according to the slip state of the vehicle, so that the actual speed of the motor reaches the target speed of the motor by adjusting the driving torque of the motor according to the current adjustment amount. An optimal slip rate of the vehicle is determined by using an actual slip rate of the vehicle and an actual utilization adhesion coefficient, and then the target speed of the motor in the vehicle is determined according to the optimal slip rate of the vehicle, so that the obtained target speed of the motor is more accurate, and the anti-slip control is more accurate. In addition, the slip state is determined based on the actual speed of the motor and the target speed of the motor, which renders a fast and accurate recognition process. In this way, an active anti-slip control can be realized with a short active anti-slip control link, a short control period, and a better control effect, which meets an anti-slip control requirement.

Other aspects will be appreciated upon reading and understanding the attached figures and detailed description.

## BRIEF DESCRIPTION OF DRAWINGS

FIG. 1 is a flowchart of an anti-slip control method for a vehicle according to an embodiment of the present disclosure.

FIG. 2 is a specific flowchart of step S2 in the anti-slip control method for the vehicle shown in FIG. 1.

FIG. 3 is a flowchart of step S3 in the anti-slip control method for the vehicle shown in FIG. 1 according to an embodiment.

FIG. 4 is a graph of a slip state of a vehicle according to an embodiment of the present disclosure.

FIG. 5 is a flowchart of step S4 in the anti-slip control method for the vehicle shown in FIG. 1 according to an embodiment.

FIG. 6 is a schematic diagram of an anti-slip control system for a vehicle according to an embodiment of the present disclosure.

## DETAILED DESCRIPTION

Reference will now be made in detail to exemplary embodiments, examples of which are illustrated in the accompanying drawings. When the following description refers to the drawings, the same numerals in different drawings indicate the same or similar elements, unless otherwise indicated. Implementations described in the following exemplary embodiments do not represent all implementations consistent with the present disclosure. Rather, they are merely examples of apparatuses and methods consistent with some aspects of the present disclosure as detailed in the appended claims.

The terms used in the present disclosure are only for the purpose of describing specific embodiments, and are not intended to limit the present disclosure. Unless otherwise defined, technical terms or scientific terms used in the present disclosure should have the ordinary meanings understood by those of ordinary skill in the art to which the present disclosure belongs. "First," "second" and similar words used in the specification and the claims of the present disclosure do not indicate any order, quantity, or importance, but are merely used to distinguish between different components. Similarly, words such as "a" or "an" do not indicate limitation on quantity, but indicate the presence of at least one. "A plurality of" or "several" means at least two. Unless otherwise specified, words such as "front," "rear," "lower," and/or "upper" are only used for illustrative purposes and are not limited to a position or a spatial orientation. Words such as "include" or "comprise" mean that an element or object before "include" or "comprise" covers elements or objects listed after "include" or "comprise" and their equivalents, and do not exclude other elements or objects. Words such as "connect" or "couple" are not limited to physical or mechanical connections, and may include electrical connections, whether direct or indirect.

As used in the specification and the appended claims of the present disclosure, the singular forms "a," "an" and "the" are intended to include the plural forms as well, unless the context clearly indicates otherwise. It should also be understood that the term "and/or" used herein refers to and includes any or all possible combinations of one or more of the associated listed items.

When a vehicle encounters a low-adhesion road surface during operation, a phenomenon of excessive wheel slip or spin easily occurs, which greatly affects stability and safety of the vehicle, and also affects acceleration performance and deceleration braking capability of the vehicle. In the relevant anti-slip control for the vehicle, a command to reduce torque output is issued and transmitted to a motor for driving upon wheel slip of the vehicle is detected. Signal lag due to signal transmission link time results in an excessively long control period, a sharp increase in a slip rate, and a sharp decrease in a lateral adhesion of wheels, which may lead to sideslip and instability of the vehicle. This seriously affects driving safety and cannot meet requirements for wheel anti-slip control of the vehicle.

The present disclosure provides an anti-slip control method and system for a vehicle, a vehicle and a computer-readable storage medium. The anti-slip control method for the vehicle includes: obtaining an actual speed of a motor in the vehicle; determining a target speed of the motor in the vehicle; determining a slip state of the vehicle according to the actual speed of the motor and the target speed of the motor; and determining a current adjustment amount for a driving torque of the motor in the vehicle according to the slip state of the vehicle, and enabling the actual speed of the motor in the vehicle to reach the target speed of the motor by determining an adjusted driving torque of the motor according to the current adjustment amount.

The anti-slip control method and system for the vehicle, the vehicle and the computer-readable storage medium are provided in embodiments of the present disclosure. With the anti-slip control method for the vehicle, a slip state of the vehicle is determined by obtaining an actual speed of the motor in the vehicle and determining a target speed of the motor in the vehicle, and then a current adjustment amount for a driving torque of the motor in the vehicle is determined according to the slip state, and the actual speed of the motor in the vehicle reaches the target speed of the motor by determining an adjusted driving torque of the motor according to the current adjustment amount. In the present disclosure, the slip state is determined based on the actual speed of the motor and the target speed of the motor, the process of which is fast and accurate, so that an active anti-slip control can be realized. With the anti-slip control method for the vehicle, an active anti-slip control link is short, a control period is short, a better anti-slip control effect is achieved, and an anti-slip control requirement is met.

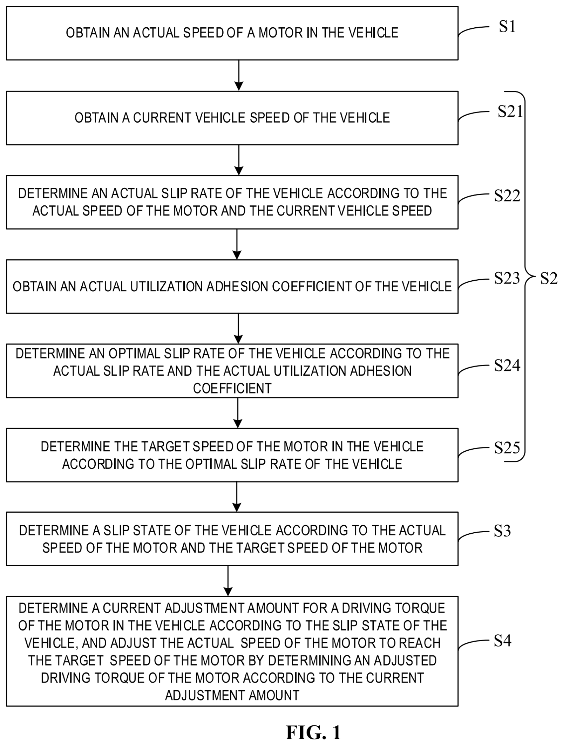

FIG. 1 is a flowchart of an anti-slip control method for a vehicle according to an embodiment of the present disclosure. As shown in FIG. 1, the anti-slip control method for the vehicle includes steps S1 to S4.

At step S1, an actual speed of a motor in the vehicle is obtained. The actual speed of the motor represents a current actual speed of the motor in the vehicle.

At step S2, a target speed of the motor in the vehicle is determined. The target speed of the motor represents a target speed that the motor in the vehicle is intended to reach, and there is no slip between wheels of the vehicle and the ground (also referred to as a road surface below) at the target speed of the motor.

At step S3, a slip state of the vehicle is determined according to the actual speed of the motor and the target speed of the motor. The slip state of the vehicle, that is, different slip states between the wheels of the vehicle and a current road surface, may be determined according to the actual speed of the motor and the target speed of the motor. For example, when the actual speed of the motor is greater than the target speed of the motor, there is a first slip state between the wheels and the current road surface, and when the actual speed of the motor is less than the target speed of the motor, there is a second slip state between the wheels and the current road surface.

At step S4, a current adjustment amount for a driving torque of the motor in the vehicle is determined according to the slip state of the vehicle, and the actual speed of the motor is adjusted to reach the target speed of the motor by determining an adjusted driving torque of the motor according to the current adjustment amount. The current adjustment amount for the driving torque of the motor varies with the slip state of the vehicle. The current adjustment amount for the driving torque of the motor is determined according to the slip state, so that the current adjustment amount can be determined more quickly and accurately.

According to the anti-slip control method for the vehicle in embodiments of the present disclosure, the slip state of the vehicle is determined by obtaining the actual speed of the motor in the vehicle and determining the target speed of the motor in the vehicle, then the current adjustment amount for the driving torque of the motor in the vehicle is determined based on the slip state, and the actual speed of the motor in the vehicle is enabled to reach the target speed of the motor by determining the adjusted driving torque of the motor according to the current adjustment amount. In the present disclosure, the slip state is determined based on the actual speed of the motor and the target speed of the motor, the process of which is fast and accurate, so that an active anti-slip control can be realized. By applying the anti-slip control method for the vehicle, an active anti-slip control link is short, a control period is short, a better anti-slip control effect is achieved, and an anti-slip control requirement is met.

In the embodiment shown in FIG. 1, step S2 includes steps S21 to S25.

At step S21, a current vehicle speed of the vehicle is obtained.

At step S22, an actual slip rate of the vehicle is determined according to the actual speed of the motor and the current vehicle speed.

At step S23, an actual utilization adhesion coefficient of the vehicle is obtained.

At step S24, an optimal slip rate of the vehicle is determined according to the actual slip rate and the actual utilization adhesion coefficient.

At step S25, the target speed of the motor in the vehicle is determined according to the optimal slip rate of the vehicle.

In this way, the optimal slip rate of the vehicle is determined by using the actual slip rate and the actual utilization adhesion coefficient of the vehicle, and then the target speed of the motor in the vehicle is determined according to the optimal slip rate of the vehicle, so that the obtained target speed of the motor is more accurate, and the anti-slip control is more accurate.

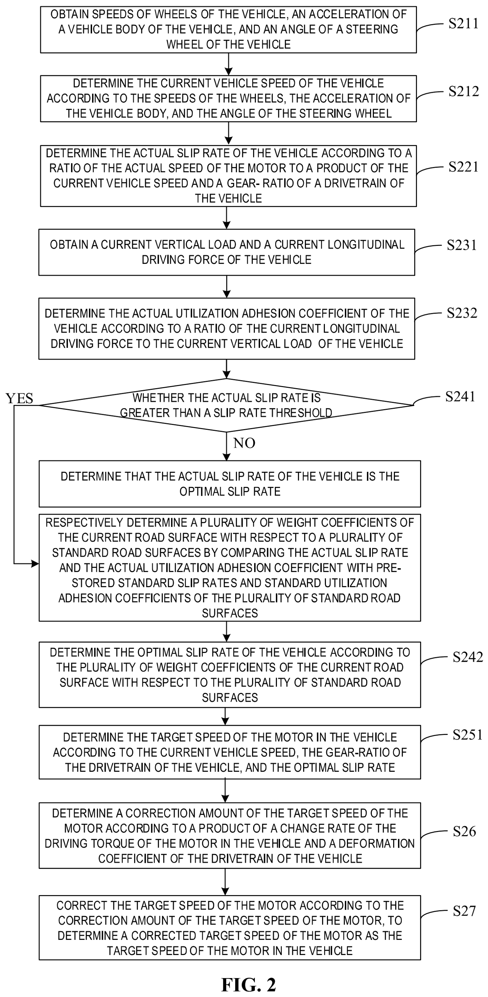

FIG. 2 is a specific flowchart of step S2 in the anti-slip control method for the vehicle shown in FIG. 1. With reference to FIGS. 1 and 2, step S21 includes steps S211 and S212.

At step S211, speeds of wheels of the vehicle, an acceleration of a vehicle body of the vehicle, and an angle of a steering wheel of the vehicle are obtained.

At step S212, the current vehicle speed of the vehicle is determined according to the speeds of the wheels, the acceleration of the vehicle body, and the angle of the steering wheel.

In this embodiment, the vehicle speed of the vehicle may be estimated based on wheel speeds of four wheels of the vehicle, an acceleration from an inertial unit of the vehicle, and the angle of the steering wheel. $V_b(t)$ represents the estimated current vehicle speed of the vehicle. This vehicle speed is a current speed of the vehicle body.

Step S22 includes step S221.

At step S221, the actual slip rate of the vehicle is determined according to a ratio of the actual speed of the motor to a product of the current vehicle speed and a gear-ratio of a drivetrain of the vehicle.

In this embodiment, the actual slip rate $\lambda(t)$ is configured to represent a degree of slip of the wheels of the vehicle with respect to the current road surface. Magnitude of the slip rate is configured to measure magnitude of the degree of slip of the wheels of the vehicle with respect to the current road surface. A higher slip rate indicates a higher degree of slip of the wheels of the vehicle with respect to the current road surface, while a lower slip rate indicates a lower degree of slip of the wheels of the vehicle with respect to the current road surface.

In this embodiment, the actual slip rate $\lambda(t)$ is represented by an expression (1):

$$\lambda(t) = \frac{\omega_m(t)}{V_b(t)i_g} \qquad (1)$$

$\lambda(t)$ is configured to represent the actual slip rate of the vehicle; $\omega_m(t)$ is configured to represent the actual speed of the motor in the vehicle; $V_b(t)$ is configured to represent the current vehicle speed of the vehicle; and $i_g$ is configured to represent the gear-ratio of the drivetrain of the vehicle.

In this way, the actual slip rate $\lambda(t)$ of the vehicle can be quickly and accurately obtained by using the above expression (1).

Step S23 includes steps S231 and S232.

At step S231, a current vertical load and a current longitudinal driving force of the vehicle are obtained.

At step S232, the actual utilization adhesion coefficient of the vehicle is determined according to a ratio of the current longitudinal driving force to the current vertical load of the vehicle.

In this embodiment, the actual utilization adhesion coefficient of the vehicle is obtained from the ratio of the current longitudinal driving force to the current vertical load of the vehicle. The actual utilization adhesion coefficient is represented by an expression (2):

$$\mu(t) = \frac{F_x(t)}{F_z(t)} \qquad\qquad (2)$$

$\mu(t)$ is configured to represent the actual utilization adhesion coefficient of the vehicle; $F_z(t)$ is configured to represent the current vertical load of the vehicle; and $F_x(t)$ is configured to represent the current longitudinal driving force of the vehicle.

In this embodiment, the current vertical load of the vehicle refers to a force acting on the wheels of the vehicle in a vertical direction, which may also be referred to as wheel load, and is determined from a weight of the vehicle itself and other wheel parameters. The current longitudinal driving force of the vehicle refers to a force acting in a longitudinal direction of the vehicle body for propelling the vehicle to move forward or inhibiting the vehicle from rolling backward. The longitudinal driving force has a significant impact on acceleration, deceleration, and traction capability of the vehicle.

In this embodiment, $F_z(t)$ represents the current vertical load of the vehicle, and $F_x(t)$ represents the current longitudinal driving force of the vehicle. The longitudinal driving force $F_x(t)$ is represented by an expression (3):

$$F_x = \frac{\frac{1}{2}[T_m - J_m\left(\frac{\Delta\omega_m}{\Delta t}\right)]i_g - T_f - J_w\left(\frac{\frac{\Delta\omega_m}{\Delta t}}{i_g}\right)}{R_w}; \qquad\qquad (3)$$

$T_m$ is configured to represent the driving torque of the motor in the vehicle; $J_m$ is configured to represent a moment of inertia of the motor in the vehicle; $\omega_m$ is configure to represent the actual speed of the motor in the vehicle; $\Delta t$ is configured to represent unit time; $\frac{\Delta\omega_m}{\Delta t}$ is configured to represent a change rate of speed of the motor in the vehicle, that is, an acceleration of the motor; $i_g$ is configured to represent the gear-ratio of the drivetrain of the vehicle; $T_f$ is configured to represent a rolling resistance torque of the wheels of the vehicle; $J_w$ is configured to represent a moment of inertia of the wheels of the vehicle; and $R_w$ is configured to represent a rolling radius of the wheels of the vehicle.

In this way, the actual utilization adhesion coefficient of the vehicle is mainly determined according to the actual speed $\omega_m$ of the motor in the vehicle, the acceleration $\frac{\Delta\omega_m}{\Delta t}$ of the motor in the vehicle, and the rolling resistance torque $T_f$ of the wheels of the vehicle.

Further, different anti-slip control methods for the vehicle are selected based on different numerical ranges of the slip rate under the current road surface and the current driving condition.

Step S24 includes steps S241 to S242.

At step S241, it is determined whether the actual slip rate is greater than a slip rate threshold. In this embodiment, the slip rate threshold is, for example, 3%.

In some embodiments, in response to determining that the actual slip rate is less than the slip rate threshold, it is determined that the actual slip rate is the optimal slip rate. In this embodiment, if the actual slip rate is less than 3%, it is determined that the current actual slip rate is the optimal slip rate. The slip rate of the current road surface has a very small value, that is, $\lambda(t) < 3\%$, in which case the difference in utilization adhesion coefficients among different road surfaces is relatively small, making it difficult to distinguish between the different road surfaces, and at this time, no slip rate control intervention is required. Therefore, the current road surface is assumed to have the best adhesion condition by default, that is, the current road surface is the optimal road surface, and the optimal slip rate under the optimal road surface can be used as the optimal slip rate of the current road surface.

In some embodiments, in response to determining that the actual slip rate is greater than the slip rate threshold (for example, greater than 3%), a plurality of weight coefficients of the current road surface with respect to a plurality of standard road surfaces are respectively determined by comparing the actual slip rate and the actual utilization adhesion coefficient with pre-stored standard slip rates and standard utilization adhesion coefficients of the plurality of standard road surfaces.

In this embodiment, when the actual slip rate is significantly large, for example, $\lambda(t) \geq 3\%$, the actual slip rate and utilization adhesion coefficient are compared with pre-stored standard slip rates and standard utilization adhesion coefficients of eight standard road surfaces, to calculate weight coefficients between the current road surface and the eight standard road surfaces, where the weight coefficients are configured to represent similarities between the current road surface and the eight standard road surfaces. The weight coefficient is represented by an expression (4):

$$\varepsilon_i(t) = \frac{1}{|\mu(t) - \mu_i(t)| + \delta} \qquad\qquad (4)$$

$\varepsilon_i(t)$ represents the weight coefficient of the current road surface with respect to the i-th road surface at a current time t; $\mu(t)$ represents the utilization adhesion coefficient of the current road surface at the current time t; $\mu_i(t)$ represents an adhesion coefficient of the i-th road surface at the current time t with an input of the slip rate of the current road surface; and $\delta$ represents a very small positive number to avoid a zero denominator.

In this way, a similarity between the current road surface and any one of the eight standard road surfaces is obtained by comparing the actual slip rate and utilization adhesion coefficient of the current road surface with the pre-stored standard slip rates and standard utilization adhesion coefficients of the eight standard road surfaces.

At step S242, the optimal slip rate of the vehicle is determined according to the plurality of weight coefficients of the current road surface with respect to the plurality of standard road surfaces. At step S242, a product of a standard slip rate of each of the plurality of standard road surfaces and a corresponding weight coefficient thereof is determined, and the optimal slip rate of the vehicle is determined according to a ratio of a sum of the products for the plurality of standard road surfaces to a sum of the plurality of weight coefficients of the current road surface with respect to the plurality of standard road surfaces.

In this embodiment, the optimal slip rate corresponding to the current road is determined according to calculated eight weight coefficients between the current road surface and the eight standard road surfaces. The optimal slip rate is represented by an expression (5):

$$\lambda_{opt}(t) = \frac{\sum \varepsilon_i(t)\lambda_{opt}}{\sum \varepsilon_i(t)} \qquad (5)$$

$\lambda_{opt}(t)$ is configured to represent the optimal slip rate of the vehicle; $\sum \varepsilon_i(t)\lambda_{opt}$ is configured to represent a sum of products for the eight standard road surfaces, where a product for each of the eight standard road surfaces is a product of the standard slip rate of the standard road surface and the weight coefficient corresponding to the standard road surface; and $\sum \varepsilon_i(t)$ is configured to represent a sum of the plurality of weight coefficients of the current road surface with respect to the standard road surfaces.

In this way, the product of the standard slip rate of each of the plurality of standard road surfaces and a corresponding weight coefficient thereof is determined, and a ratio of a sum of the products for the plurality of standard road surfaces to a sum of the plurality of weight coefficients of the current road surface with respect to the plurality of standard road surfaces is determined as the optimal slip rate of the vehicle, so that the determined optimal slip rate can be more accurate.

Further, step S25 includes step S251.

At step S251, the target speed of the motor in the vehicle is determined according to the current vehicle speed, the gear-ratio of the drivetrain of the vehicle, and the optimal slip rate.

In this embodiment, the target speed of the motor refers to a speed of the motor corresponding to a wheel speed when the wheels of the vehicle are in an optimal slip state. The target speed of the motor is expressed by an expression (6):

$$\omega_{m_{targ}}(t) = V_b(t)i_g(1 + \lambda_{opt}(t)) \qquad (6)$$

$\omega_{m_{targ}}(t)$ is configured to represent the target speed of the motor in the vehicle; $\lambda_{opt}(t)$ is configured to represent the optimal slip rate of the vehicle; $V_b(t)$ is configured to represent the current vehicle speed of the vehicle; and $i_g$ is configured to represent the gear-ratio of the drivetrain of the vehicle.

Since power transmission between the motor and the wheels of the vehicle is not completely rigidly coupled, it is necessary to consider a speed error caused by an elastic deformation of shafting of the drivetrain during torque loading, and therefore, this embodiment may correct the target speed of the motor.

In the embodiment shown in FIG. 2, after the target speed of the motor in the vehicle is determined, the anti-slip control method for the vehicle further includes steps S26 to S27.

At step S26, a correction amount of the target speed of the motor is determined according to a product of a change rate of the driving torque of the motor in the vehicle and a deformation coefficient of the drivetrain of the vehicle.

At step S27, the target speed of the motor is corrected according to the correction amount of the target speed of the motor, to determine a corrected target speed of the motor as the target speed of the motor in the vehicle.

In this embodiment, the target speed of the motor is corrected for only a torque loading process of the motor and a stable torque keeping process of the motor, and is not corrected for a torque unloading process of the motor. In the torque loading process of the motor and the stable torque outputting process of the motor, a change rate of an actual output torque of the motor multiplied by the deformation coefficient of the drivetrain is used as the correction amount of the target speed of the motor. The correction amount of the target speed of the motor is expressed by an expression (7):

$$\omega_{offset} = K(t) \times \max\left(\frac{T_m(t) - LPF(T_m(t))}{\Delta T}, 0\right) \qquad (7)$$

$T_m(t)$ is configured to represent the driving torque of the motor in the vehicle; $LPF(T_m)$ is configured to represent performing first-order low-pass filtering processing on $T_m(t)$; $\Delta T$ is configured to represent a time constant of the first-order low-pass filtering; and $K(t)$ is configured to represent the deformation coefficient of the drivetrain of the vehicle, which may be obtained through real-vehicle calibration in real-vehicle applications.

The corrected target speed of the motor is obtained according to expressions (6) and (7), which is represented by an expression (8):

$$\omega_{m_{targ}}(t) = V_b(t)i_g\left(1 + \lambda_{opt}(t)\right) + K(t) \times \max\left(\frac{T_m(t) - LPF(T_m(t))}{\Delta T}, 0\right) \qquad (8)$$

In this way, the corrected target speed of the motor in the vehicle can be determined according to the target speed of the motor and the correction amount of the target speed of the motor, so that the corrected target speed of the motor can be more accurate.

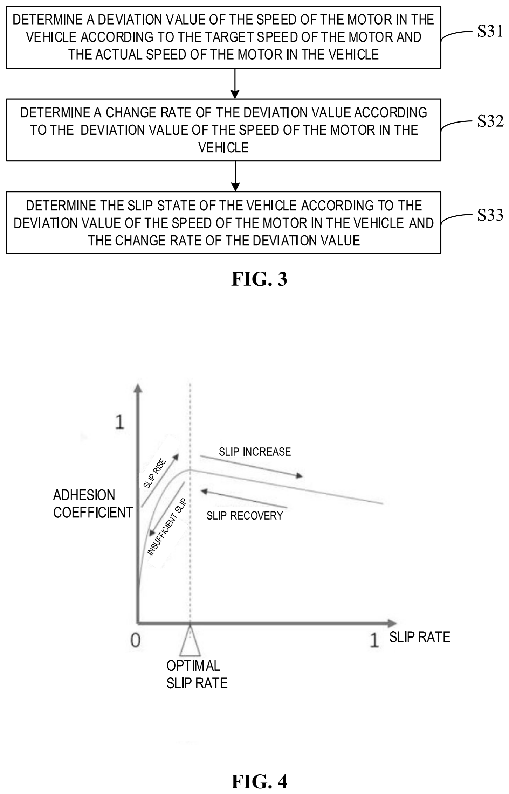

FIG. 3 is a flowchart of step S3 in the anti-slip control method for the vehicle shown in FIG. 1 according to an embodiment. With reference to FIGS. 1 to 3, step S3 includes steps S31 to S33.

At step S31, a deviation value of the speed of the motor in the vehicle is determined according to the corrected target speed and the actual speed of the motor in the vehicle.

At step S32, a change rate of the deviation value is determined according to the deviation value of the speed of the motor.

At step S33, the slip state of the vehicle is determined according to the deviation value of the speed of the motor and the change rate.

In this embodiment, the slip state is determined based on the deviation value of the speed of the motor between the actual speed of the motor and the target speed of the motor, and the change rate of the deviation value of the speed of the motor. The deviation value of the speed of the motor is expressed by an expression (9):

$$e(t) = \omega_m(t) - \omega_{m_{targ}}(t) \qquad (9)$$

$e(t)$ is configured to represent the deviation value of the speed of the motor between the actual speed of the motor and the target speed of the motor at time t; $\omega_m(t)$ is configured to represent the actual speed of the motor in the vehicle; and $\omega_{m_{targ}}(t)$ is configured to represent the corrected target speed of the motor in the vehicle.

The change rate of the deviation value of the speed of the motor is expressed by an expression (10):

$$\dot{e}(t) = \frac{e(t) - LPF(e(t))}{\Delta T} \qquad (10)$$

$\dot{e}(t)$ is configured to represent the change rate of the deviation value of the speed of the motor at the time t; $e(t)$ is configured to represent the deviation value of the speed of the motor between the actual speed of the motor and the corrected target speed of the motor at the time t; $LPF(e(t))$ is configured to represent performing first-order low-pass filtering processing on $e(t)$; and $\Delta T$ is configured to represent a time constant of the first-order low-pass filtering.

In this way, based on the calculated deviation value $e(t)$ of the speed of the motor and the change rate $\dot{e}(t)$ of the deviation value of the speed of the motor, the slip state of the wheels of the vehicle at the current time t may be determined. A specific correspondence between the slip state, the deviation value of the speed of the motor, and the change rate of the deviation value of the speed of the motor is shown in the following table:

Table 1: correspondence between the slip state, the deviation value of the speed of the motor, and the change rate of the deviation value of the speed of the motor

| deviation value of speed of the motor | $e(t) > 0$ | $e(t) > 0$ | $e(t) < 0$ | $e(t) < 0$ | $e(t) = 0$ |
|---|---|---|---|---|---|
| change rate of deviation value of speed of the motor | $\dot{e}(t) \geq 0$ | $\dot{e}(t) < 0$ | $\dot{e}(t) > 0$ | $\dot{e}(t) \leq 0$ | $\dot{e}(t)$ is any value |
| slip state | slip increase | slip recovery | slip rise | insufficient slip | optimal slip |

FIG. 4 is a graph of a slip state of a vehicle according to an embodiment of the present disclosure. In the embodiment shown in FIG. 4 and Table 1, in step S33, in response to the deviation value of the speed of the motor in the vehicle being greater than 0 and the change rate of the deviation value being greater than or equal to 0, it is determined that the slip state of the vehicle is a slip increase state.

In the embodiment shown in FIG. 4 and Table 1, in step S33, in response to the deviation value of the speed of the motor in the vehicle being greater than 0 and the change rate of the deviation value being less than 0, it is determined that the slip state of the vehicle is a slip recovery state.

In the embodiment shown in FIG. 4 and Table 1, in step S33, in response to the deviation value of the speed of the motor in the vehicle being less than 0 and the change rate of the deviation value being greater than 0, it is determined that the slip state of the vehicle is a slip rise state.

In the embodiment shown in FIG. 4 and Table 1, in step S33, in response to the deviation value of the speed of the motor in the vehicle being less than 0 and the change rate of the deviation value being greater than or equal to 0, it is determined that the slip state of the vehicle is the slip increase state.

In the embodiment shown in FIG. 4 and Table 1, in step S33, in response to the deviation value of the speed of the motor in the vehicle being equal to 0 and the change rate of the deviation value being any value, it is determined that the slip state of the vehicle is an optimal slip state.

When the actual speed of the motor exceeds the target speed of the motor, it indicates that the wheels of the vehicle are in an excessive slip state. At this time, it is necessary to intervene in the driving torque of the motor to reduce the driving torque of the motor so as to avoid further slip, which affects stability and safety of the vehicle during driving. In this embodiment, a motor torque command is adjusted according to the deviation value between the actual speed of the motor and the corrected target speed of the motor. In response to the motor torque command, the motor outputs an actual torque, which then acts on the vehicle system driven by the motor. At this time, the speed response of the motor begins to change, which, combined with the influence of the inertia of the moving components, results in a significant lag in the speed adjustment response of the motor. Therefore, in order to achieve a fast and stable active anti-slip control effect, a segmented PI (Proportional-Integral) control algorithm is adopted to determine the slip state of the wheels, and different PI parameters are called based on different slip states, so that a torque output of the motor may be quickly and accurately adjusted.

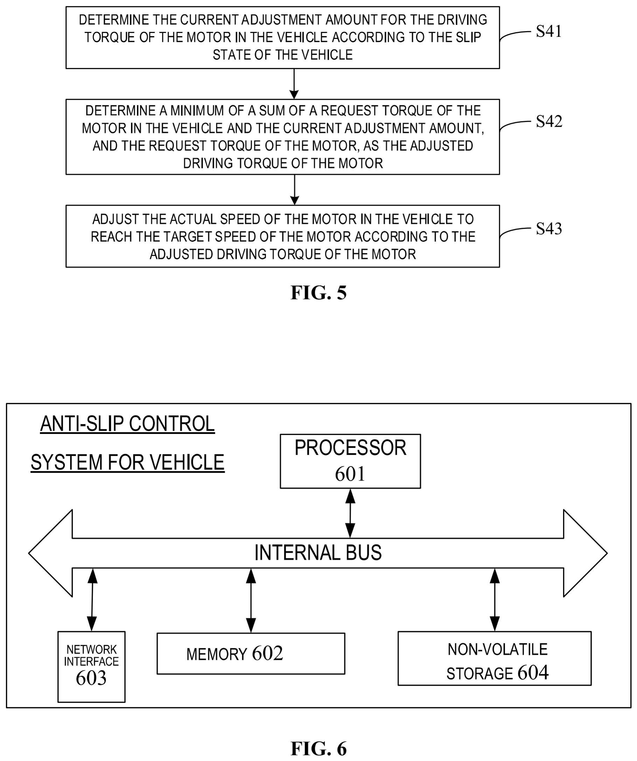

FIG. 5 is a flowchart of step S4 in the anti-slip control method for the vehicle shown in FIG. 1 according to an embodiment. With reference to FIGS. 1 to 5, step S4 includes steps S41 to S43.

At step S41, the current adjustment amount for the driving torque of the motor in the vehicle is determined according to the slip state of the vehicle.

At step S42, a minimum of a sum of a request torque of the motor in the vehicle and the current adjustment amount, and the request torque of the motor is determined as the adjusted driving torque of the motor.

At step S43, the actual speed of the motor in the vehicle is adjusted to reach the target speed of the motor according to the adjusted driving torque of the motor.

In this embodiment, PI combination values in different slip states are selected based on the determined slip state of the vehicle, and the driving torque of the motor is adjusted based on the deviation value e(t) of the speed of the motor until the slip state exits, for example, until the actual slip rate of the vehicle is less than the slip rate threshold.

When the actual speed of the motor is higher than the target speed of the motor, it is determined that the wheels are in the excessive slip state, triggering an active anti-slip control. During the active anti-slip control, PI combination values in different slip states are selected for the different slip states, and the PI combination value is the current adjustment amount for the driving torque of the motor in the vehicle. The driving torque of the motor is a driving torque for driving and adjusting the actual speed of the motor. Under normal driving conditions, wheel slip occurs when the driving torque of the motor is excessively large, and the driving torque of the motor needs to be properly reduced to prevent the slip. Typically, the driving torque of the motor is corresponding to a torque request value provided by a driver, i.e., the request torque of the motor; however, the slip occurs when the request torque of the motor is greater than an adhesion of a road surface. Therefore, according to the minimum of the sum of the request torque of the motor in the vehicle and the current adjustment amount for the driving torque of the motor, and the request torque of the motor, the adjusted driving torque of the motor is determined to adjust the actual speed of the motor in the vehicle to reach the target speed of the motor.

The adjusted driving torque of the motor is represented by an expression (11):

$$Tq_{int} = \min\left((Tq_{req} + P * I * e(\text{t})), Tq_{req}\right) \qquad (11)$$

$Tq_{int}$ is configured to represent the adjusted driving torque of the motor in the vehicle; $Tq_{req}$ is configured to represent the driving torque of the motor in the vehicle, that is, the request torque of the motor set by the driver; P and I are respectively configured to represent a proportional coefficient and an integral coefficient of the deviation value $e(t)$ of the speed of the motor; $P * I * e(t)$ is configured to represent the current adjustment amount for the driving torque of the motor;

and min is an operation function to find the minimum value.

In this way, by calling different PI parameter groups in different slip states, the vehicle may be quickly stabilized from an unstable state with an excessive slip.

In some embodiments, when the vehicle switches between different slip states, the anti-slip control method for the vehicle further includes: configuring a switching initial value for the driving torque of the motor when the motor in the vehicle switches between the different slip states. In some embodiments, configuring the switching initial value for the driving torque of the motor when the motor in the vehicle switches between the different slip states includes: determining the switching initial value for the driving torque of the motor when the motor in the vehicle switches between the slip states according to an adjusted driving torque of the motor at a time immediately before switching between the slip states, a request torque of the motor during the switching, and a deviation value of the speed of the motor during the switching.

In order to ensure a smooth torque output of the motor when the vehicle switches between different slip states, and to avoid a sudden change or step in the torque during the torque adjustment of the motor caused by selection of different PI parameters during the switching between the slip states, the I-term (integral term) needs to be assigned an initial value during switching between the slip states, so as to ensure a smooth transition of torque commands of the motor during the switching between the different slip states.

Discretization of the above expression (11) is represented by an expression (12):

$$Tq_{int}(k) = \min \left( Tq_{req}(k), \left( Tq_{req}(k) + P*e(\mathrm{k}) + I_0 + \sum_0^t I*e(\mathrm{k})*\mathrm{dt} \right) \right) \quad (12)$$

$I_0$ is configured to represent an initial value of the I-term, which remains unchanged when the slip state remains unchanged. $I_0$ is reset in the case of switching between the slip states. In the case of switching between the slip states, the initial value $I_0$ of the I-term is reset, to ensure the smooth transition of torque output of the motor.

The initial value $I_0$ of the I-term is represented by an expression (13):

$$I_0 = Tq_{int}(n-1) - Tq_{req}(n) - P*e(\mathrm{n}) \quad (13)$$

$Tq_{int}(n-1)$ is configured to represent the adjusted driving torque of the motor at the time immediately before the switching between the slip states; $Tq_{req}(n)$ is configured to represent the request torque of the motor during the switching between the slip states; and $e(n)$ is configured to represent the deviation value of the speed of the motor at the time of the switching between the slip states.

By actively adjusting the output of the driving torque of the motor, the actual speed of the motor is stabilized at a set target speed of the motor, so that the wheels can be operated in the optimal slip rate state, maximum utilization of wheel-road adhesion may be achieved, and the driving torque requirement for the anti-slip control for the vehicle may be maximized.

In some embodiments, when the adjusted driving torque $Tq_{int}$ of the motor in the vehicle is less than or equal to the request torque $Tq_{req}$ of the motor in the vehicle, and the slip state is not the slip increase or slip recovery state, it indicates that the active anti-slip control is no longer needed at this time, and the vehicle exits the active anti-slip control.

With the anti-slip control method for the vehicle in this embodiment, the slip state of the vehicle may be determined more quickly and accurately based on the actual speed of the motor and the target speed of the motor. Based on the actual speed of the motor and the target speed of the motor, the active anti-slip control is implemented, thereby implementing control of the optimal slip rate. According to the above, the active anti-slip control for the vehicle has a short signal transmission link, a short control and adjustment period, and a better anti-slip control effect. In addition, based on the slip state, the segmented PI algorithm is adopted to adjust the driving torque of the motor, so that the wheels can be quickly and stably controlled to achieve the optimal slip rate. Due to a fast driving torque response of the motor, in the case of the wheel slip when the motor drives the vehicle, the wheel slip is suppressed by reducing the motor torque, enabling a better anti-slip control effect. In this way, the better anti-slip control effect can be obtained, and the stability and safety of the vehicle can be improved while ensuring a power performance of the vehicle.

The present disclosure further provides a computer-readable storage medium having a program stored therein, where the program, when executed by at least one processor, implements the anti-slip control method for the vehicle as shown in the embodiments of FIGS. 1 to 5. In some embodiments, the computer-readable storage medium may include an internal storage unit of the vehicle, such as a hard disk or a memory. The computer-readable storage medium may also include an external storage device of the vehicle, such as a plug-in hard disk, a smart media card (SMC), an SD (Secure Digital) card, a flash card, equipped on the device. Further, the computer-readable storage medium may include both an internal storage unit and an external storage device of the vehicle. The computer-readable storage medium is configured to store a computer program and other programs and data required by the vehicle, and may also be configured to temporarily store data that has been output or will be output. From a hardware perspective, as shown in FIG. 6, FIG. 6 is a hardware structural diagram of a vehicle where the processor of the present disclosure is located. In addition to the processor 601, the memory 602, the network interface 603, and the non-volatile storage 604 shown in FIG. 6, the vehicle where the projection system is located in the embodiments may usually include other hardware according to actual functions of the vehicle, which will not be repeated herein.

The present disclosure further provides an anti-slip control system for a vehicle including one or more processors for implementing the anti-slip control method for the vehicle according to any one of the above embodiments. For the system embodiment, since it basically corresponds to the method embodiment, reference may be made to the partial description of the method embodiment for relevant parts. The system embodiment described above are merely illustrative, where the units described as separate components may or may not be physically separate, and the components displayed as units may or may not be physical units, that is, may be located in one place, or may be distributed on multiple network units. Some or all of the units may be selected according to actual needs to achieve the objectives of the technical solutions of the present disclosure. Those skilled in the art can understand and implement the technical solutions of the present disclosure without creative efforts.

The present disclosure further provides a vehicle including the anti-slip control system for the vehicle. The vehicle is configured to implement the anti-slip control method for the vehicle in any one of FIGS. 1 to 5 by using the anti-slip control system for the vehicle. The present disclosure determines the slip state based on the actual speed of the motor and the target speed of the motor, the process of which is fast and accurate. In this way, the active anti-slip control function of the vehicle can be realized with a short active anti-slip control link, a short control period, and a better anti-slip control effect, and the anti-slip control requirement can be met.

The foregoing are merely some embodiments of the present disclosure, and are not intended to limit the present disclosure. Any modifications, equivalent substitutions, improvements, etc. made within the spirit and principle of the present disclosure shall fall within the scope of protection of the present disclosure.

**Claims**

1. An anti-slip control method for a vehicle, comprising:

   (S1) obtaining an actual speed of a motor in the vehicle;
   (S21) obtaining a current vehicle speed of the vehicle;
   (S22) determining an actual slip rate of the vehicle according to the actual speed of the motor and the current vehicle speed;
   (S23) obtaining an actual utilization adhesion coefficient of the vehicle;
   (S24) determining an optimal slip rate of the vehicle according to the actual slip rate and the actual utilization adhesion coefficient;
   (S25) determining a target speed of the motor in the vehicle according to the optimal slip rate of the vehicle;
   (S3) determining a slip state of the vehicle according to the actual speed of the motor and the target speed of the motor; and
   (S4) determining a current adjustment amount for a driving torque of the motor in the vehicle according to the slip state of the vehicle, and enabling the actual speed of the motor in the vehicle to reach the target speed of the motor by determining an adjusted driving torque of the motor according to the current adjustment amount.

2. The method according to claim 1, wherein (S21) obtaining the current vehicle speed of the vehicle comprises:

   (S211) obtaining speeds of wheels of the vehicle, an acceleration of a vehicle body of the vehicle, and an angle of a steering wheel of the vehicle; and
   (S212) determining the current vehicle speed of the vehicle according to the speeds of the wheels, the acceleration of the vehicle body, and the angle of the steering wheel.

3. The method according to claim 1, wherein (S22) determining the actual slip rate of the vehicle according to the actual speed of the motor and the current vehicle speed comprises:
   (S221) determining the actual slip rate of the vehicle according to a ratio of the actual speed of the motor to a product of the current vehicle speed and a gear-ratio of a drivetrain of the vehicle.

4. The method according to claim 1, wherein (S23) obtaining the actual utilization adhesion coefficient of the vehicle comprises:

   (S231) obtaining a current vertical load and a current longitudinal driving force of the vehicle; and
   (S232) determining the actual utilization adhesion coefficient of the vehicle according to a ratio of the current longitudinal driving force to the current vertical load of the vehicle.

5.  The method according to claim 1, wherein (S24) determining the optimal slip rate of the vehicle according to the actual slip rate and the actual utilization adhesion coefficient comprises:

    (S241) determining whether the actual slip rate is greater than a slip rate threshold;
    in response to determining that the actual slip rate is less than the slip rate threshold, determining the actual slip rate as the optimal slip rate of the vehicle;
    in response to determining that the actual slip rate is greater than the slip rate threshold, respectively determining a plurality of weight coefficients of a current road surface with respect to a plurality of standard road surfaces by comparing the actual slip rate and the actual utilization adhesion coefficient with pre-stored standard slip rates and standard utilization adhesion coefficients of the plurality of standard road surfaces; and
    (S242) determining the optimal slip rate of the vehicle according to the plurality of weight coefficients of the current road surface with respect to the plurality of standard road surfaces.

6.  The method according to claim 5, wherein (S242) determining the optimal slip rate of the vehicle according to the plurality of weight coefficients of the current road surface with respect to the plurality of standard road surfaces comprises:
    determining a product of a standard slip rate of each of the plurality of standard road surfaces and a corresponding weight coefficient thereof, and determining, a ratio of a sum of products for the plurality of standard road surfaces to a sum of the plurality of weight coefficients of the current road surface with respect to the plurality of standard road surfaces, as the optimal slip rate of the vehicle.

7.  The method according to claim 1, wherein (S25) determining the target speed of the motor in the vehicle according to the optimal slip rate of the vehicle comprises:
    (S251) determining the target speed of the motor in the vehicle according to the current vehicle speed, a gear-ratio of a drivetrain of the vehicle and the optimal slip rate.

8.  The method according to claim 7, wherein determining the target speed of the motor in the vehicle further comprises:

    (S26) determining a correction amount of the target speed of the motor according to a product of a change rate of the driving torque of the motor in the vehicle and a deformation coefficient of the drivetrain of the vehicle; and
    (S27) correcting the target speed of the motor according to the correction amount of the target speed of the motor, to determine a corrected target speed of the motor as the target speed of the motor in the vehicle.

9.  The method according to claim 1, wherein (S3) determining the slip state of the vehicle according to the actual speed of the motor and the target speed of the motor comprises:

    (S31) determining a deviation value of a speed of the motor in the vehicle according to the target speed and the actual speed of the motor in the vehicle;
    (S32) determining, according to the deviation value of the speed of the motor, a change rate of the deviation value; and
    (S33) determining the slip state of the vehicle according to the deviation value of the speed of the motor and the change rate of the deviation value.

10. The method according to claim 9, wherein determining the slip state of the vehicle according to the deviation value of the speed of the motor and the change rate of the deviation value comprises one of:

    in response to the deviation value being greater than 0 and the change rate of the deviation value being greater than or equal to 0, determining that the slip state is a slip increase state;
    in response to the deviation value being greater than 0 and the change rate of the deviation value being less than 0, determining that the slip state is a slip recovery state;
    in response to the deviation value being less than 0 and the change rate of the deviation value being greater than 0, determining that the slip state is a slip rise state;
    in response to the deviation value being less than 0 and the change rate of the deviation value being greater than or equal to 0, determining that the slip state is the slip increase state; or
    in response to the deviation value being equal to 0 and the change rate of the deviation value being any value, determining that the slip state is an optimal slip state.

11. The method according to claim 1 or 10, wherein determining the current adjustment amount for the driving torque of the motor in the vehicle according to the slip state of the vehicle, and enabling the actual speed of the motor in the vehicle to reach the target speed of the motor by determining the adjusted driving torque of the motor according to the current adjustment amount comprises:

(S41) determining the current adjustment amount for the driving torque of the motor in the vehicle according to the slip state of the vehicle;
(S42) determining, a minimum of a sum of a request torque of the motor in the vehicle and the current adjustment amount, and the request torque of the motor, as the adjusted driving torque of the motor; and
(S43) adjusting the actual speed of the motor in the vehicle to reach the target speed of the motor according to the adjusted driving torque of the motor.

12. The method according to claim 1 or 10, wherein in response to the vehicle switching between different slip states, the method further comprises:
configuring a switching initial value for the driving torque of the motor in response to the motor in the vehicle switching between the different slip states.

13. The method according to claim 12, wherein configuring the switching initial value for the driving torque of the motor in response to the motor in the vehicle switching between the different slip states comprises:
determining the switching initial value for the driving torque of the motor according to the adjusted driving torque of the motor at a time immediately before switching, a request torque of the motor during the switching, and a deviation value of a speed of the motor during the switching.

14. A computer-readable storage medium, having a program stored therein, wherein the program, when executed by one or more processors, implements the method according to any one of claims 1 to 13.

15. An anti-slip control system for a vehicle, comprising one or more processors configured to implement the method according to any one of claims 1 to 13.

16. A vehicle, comprising the anti-slip control system for the vehicle according to claim 15.

```
┌─────────────────────────────────────────────────────────────┐
│   OBTAIN AN ACTUAL SPEED OF A MOTOR IN THE VEHICLE          │──── S1
└─────────────────────────────────────────────────────────────┘
                            │
                            ▼
┌─────────────────────────────────────────────────────────────┐
│      OBTAIN A CURRENT VEHICLE SPEED OF THE VEHICLE          │──── S21
└─────────────────────────────────────────────────────────────┘
                            │
                            ▼
┌─────────────────────────────────────────────────────────────┐
│  DETERMINE AN ACTUAL SLIP RATE OF THE VEHICLE ACCORDING TO   │
│  THE ACTUAL SPEED OF THE MOTOR AND THE CURRENT VEHICLE SPEED │──── S22
└─────────────────────────────────────────────────────────────┘
                            │
                            ▼
┌─────────────────────────────────────────────────────────────┐
│ OBTAIN AN ACTUAL UTILIZATION ADHESION COEFFICIENT OF THE     │──── S23   ┐
│ VEHICLE                                                       │           ├ S2
└─────────────────────────────────────────────────────────────┘           │
                            │                                              │
                            ▼                                              │
┌─────────────────────────────────────────────────────────────┐           │
│  DETERMINE AN OPTIMAL SLIP RATE OF THE VEHICLE ACCORDING TO  │           │
│  THE ACTUAL SLIP RATE AND THE ACTUAL UTILIZATION ADHESION    │──── S24   │
│  COEFFICIENT                                                  │           │
└─────────────────────────────────────────────────────────────┘           │
                            │                                              │
                            ▼                                              │
┌─────────────────────────────────────────────────────────────┐           │
│  DETERMINE THE TARGET SPEED OF THE MOTOR IN THE VEHICLE      │──── S25   ┘
│  ACCORDING TO THE OPTIMAL SLIP RATE OF THE VEHICLE           │
└─────────────────────────────────────────────────────────────┘
                            │
                            ▼
┌─────────────────────────────────────────────────────────────┐
│  DETERMINE A SLIP STATE OF THE VEHICLE ACCORDING TO THE      │──── S3
│  ACTUAL SPEED OF THE MOTOR AND THE TARGET SPEED OF THE MOTOR │
└─────────────────────────────────────────────────────────────┘
                            │
                            ▼
┌─────────────────────────────────────────────────────────────┐
│  DETERMINE A CURRENT ADJUSTMENT AMOUNT FOR A DRIVING TORQUE  │
│  OF THE MOTOR IN THE VEHICLE ACCORDING TO THE SLIP STATE OF  │
│  THE VEHICLE, AND ADJUST THE ACTUAL SPEED OF THE MOTOR TO    │──── S4
│  REACH THE TARGET SPEED OF THE MOTOR BY DETERMINING AN       │
│  ADJUSTED DRIVING TORQUE OF THE MOTOR ACCORDING TO THE       │
│  CURRENT ADJUSTMENT AMOUNT                                   │
└─────────────────────────────────────────────────────────────┘
```

**FIG. 1**

```
┌─────────────────────────────────────────────────────┐
│ OBTAIN SPEEDS OF WHEELS OF THE VEHICLE, AN ACCELERATION OF │  ─ S211
│ A VEHICLE BODY OF THE VEHICLE, AND AN ANGLE OF A STEERING  │
│ WHEEL OF THE VEHICLE                                       │
└─────────────────────────────────────────────────────┘
                          │
                          ▼
┌─────────────────────────────────────────────────────┐
│ DETERMINE THE CURRENT VEHICLE SPEED OF THE VEHICLE        │  ─ S212
│ ACCORDING TO THE SPEEDS OF THE WHEELS, THE ACCELERATION OF│
│ THE VEHICLE BODY, AND THE ANGLE OF THE STEERING WHEEL     │
└─────────────────────────────────────────────────────┘
                          │
                          ▼
┌─────────────────────────────────────────────────────┐
│ DETERMINE THE ACTUAL SLIP RATE OF THE VEHICLE ACCORDING TO A│  ─ S221
│ RATIO OF THE ACTUAL SPEED OF THE MOTOR TO A PRODUCT OF THE  │
│ CURRENT VEHICLE SPEED AND A GEAR-RATIO OF A DRIVETRAIN OF   │
│ THE VEHICLE                                                 │
└─────────────────────────────────────────────────────┘
                          │
                          ▼
┌─────────────────────────────────────────────────────┐
│ OBTAIN A CURRENT VERTICAL LOAD AND A CURRENT LONGITUDINAL  │  ─ S231
│ DRIVING FORCE OF THE VEHICLE                               │
└─────────────────────────────────────────────────────┘
                          │
                          ▼
┌─────────────────────────────────────────────────────┐
│ DETERMINE THE ACTUAL UTILIZATION ADHESION COEFFICIENT OF THE│  ─ S232
│ VEHICLE ACCORDING TO A RATIO OF THE CURRENT LONGITUDINAL    │
│ DRIVING FORCE TO THE CURRENT VERTICAL LOAD OF THE VEHICLE   │
└─────────────────────────────────────────────────────┘
```

YES ◄── WHETHER THE ACTUAL SLIP RATE IS GREATER THAN A SLIP RATE THRESHOLD ─ S241

NO

```
┌─────────────────────────────────────────────────────┐
│ DETERMINE THAT THE ACTUAL SLIP RATE OF THE VEHICLE IS THE │
│ OPTIMAL SLIP RATE                                         │
└─────────────────────────────────────────────────────┘
                          │
                          ▼
┌─────────────────────────────────────────────────────┐
│ RESPECTIVELY DETERMINE A PLURALITY OF WEIGHT COEFFICIENTS OF│
│ THE CURRENT ROAD SURFACE WITH RESPECT TO A PLURALITY OF     │
│ STANDARD ROAD SURFACES BY COMPARING THE ACTUAL SLIP RATE    │
│ AND THE ACTUAL UTILIZATION ADHESION COEFFICIENT WITH PRE-   │
│ STORED STANDARD SLIP RATES AND STANDARD UTILIZATION         │
│ ADHESION COEFFICIENTS OF THE PLURALITY OF STANDARD ROAD     │
│ SURFACES                                                    │
└─────────────────────────────────────────────────────┘
                          │
                          ▼
┌─────────────────────────────────────────────────────┐
│ DETERMINE THE OPTIMAL SLIP RATE OF THE VEHICLE ACCORDING TO│  ─ S242
│ THE PLURALITY OF WEIGHT COEFFICIENTS OF THE CURRENT ROAD   │
│ SURFACE WITH RESPECT TO THE PLURALITY OF STANDARD ROAD     │
│ SURFACES                                                   │
└─────────────────────────────────────────────────────┘
                          │
                          ▼
┌─────────────────────────────────────────────────────┐
│ DETERMINE THE TARGET SPEED OF THE MOTOR IN THE VEHICLE    │  ─ S251
│ ACCORDING TO THE CURRENT VEHICLE SPEED, THE GEAR-RATIO OF │
│ THE DRIVETRAIN OF THE VEHICLE, AND THE OPTIMAL SLIP RATE  │
└─────────────────────────────────────────────────────┘
                          │
                          ▼
┌─────────────────────────────────────────────────────┐
│ DETERMINE A CORRECTION AMOUNT OF THE TARGET SPEED OF THE   │  ─ S26
│ MOTOR ACCORDING TO A PRODUCT OF A CHANGE RATE OF THE       │
│ DRIVING TORQUE OF THE MOTOR IN THE VEHICLE AND A DEFORMATION│
│ COEFFICIENT OF THE DRIVETRAIN OF THE VEHICLE              │
└─────────────────────────────────────────────────────┘
                          │
                          ▼
┌─────────────────────────────────────────────────────┐
│ CORRECT THE TARGET SPEED OF THE MOTOR ACCORDING TO THE    │  ─ S27
│ CORRECTION AMOUNT OF THE TARGET SPEED OF THE MOTOR, TO    │
│ DETERMINE A CORRECTED TARGET SPEED OF THE MOTOR AS THE    │
│ TARGET SPEED OF THE MOTOR IN THE VEHICLE                  │
└─────────────────────────────────────────────────────┘
```

**FIG. 2**

| DETERMINE A DEVIATION VALUE OF THE SPEED OF THE MOTOR IN THE VEHICLE ACCORDING TO THE TARGET SPEED OF THE MOTOR AND THE ACTUAL SPEED OF THE MOTOR IN THE VEHICLE | — S31 |

| DETERMINE A CHANGE RATE OF THE DEVIATION VALUE ACCORDING TO THE DEVIATION VALUE OF THE SPEED OF THE MOTOR IN THE VEHICLE | — S32 |

| DETERMINE THE SLIP STATE OF THE VEHICLE ACCORDING TO THE DEVIATION VALUE OF THE SPEED OF THE MOTOR IN THE VEHICLE AND THE CHANGE RATE OF THE DEVIATION VALUE | — S33 |

**FIG. 3**

**FIG. 4**

DETERMINE THE CURRENT ADJUSTMENT AMOUNT FOR THE DRIVING TORQUE OF THE MOTOR IN THE VEHICLE ACCORDING TO THE SLIP STATE OF THE VEHICLE — S41

DETERMINE A MINIMUM OF A SUM OF A REQUEST TORQUE OF THE MOTOR IN THE VEHICLE AND THE CURRENT ADJUSTMENT AMOUNT, AND THE REQUEST TORQUE OF THE MOTOR, AS THE ADJUSTED DRIVING TORQUE OF THE MOTOR — S42

ADJUST THE ACTUAL SPEED OF THE MOTOR IN THE VEHICLE TO REACH THE TARGET SPEED OF THE MOTOR ACCORDING TO THE ADJUSTED DRIVING TORQUE OF THE MOTOR — S43

**FIG. 5**

ANTI-SLIP CONTROL SYSTEM FOR VEHICLE

PROCESSOR 601

INTERNAL BUS

NETWORK INTERFACE 603

MEMORY 602

NON-VOLATILE STORAGE 604

**FIG. 6**

## INTERNATIONAL SEARCH REPORT

| International application No. |
|---|
| **PCT/CN2024/101173** |

**A.    CLASSIFICATION OF SUBJECT MATTER**

B60W30/18(2012.01)i

According to International Patent Classification (IPC) or to both national classification and IPC

**B.    FIELDS SEARCHED**

Minimum documentation searched (classification system followed by classification symbols)

IPC：B60W

Documentation searched other than minimum documentation to the extent that such documents are included in the fields searched

Electronic data base consulted during the international search (name of data base and, where practicable, search terms used)

CNABS, VEN, CNKI: 防滑, 滑移率, 车速, 转速, 附着系数, 扭矩, slip, rate, speed, rotate, torque, adhesion, coefficient

**C.    DOCUMENTS CONSIDERED TO BE RELEVANT**

| Category* | Citation of document, with indication, where appropriate, of the relevant passages | Relevant to claim No. |
|---|---|---|
| PX | CN 116946136 A (ZHEJIANG ZEEKR INTELLIGENT TECHNOLOGY CO., LTD. et al.) 27 October 2023 (2023-10-27)<br>claims 1-16 | 1-16 |
| X | CN 113103881 A (SUZHOU AUTOMOTIVE RESEARCH INSTITUTE, TSINGHUA UNIVERSITY (WUJIANG) et al.) 13 July 2021 (2021-07-13)<br>description, paragraphs 0057-0108, and figures 1-2 | 1-8, 11-16 |
| A | CN 114407673 A (GEMTAI VEHICLE TECHNOLOGY (SUZHOU) CO., LTD) 29 April 2022 (2022-04-29)<br>entire document | 1-16 |
| A | DE 102011081709 A1 (ROBERT BOSCH GMBH) 28 February 2013 (2013-02-28)<br>entire document | 1-16 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 August 2024** | **29 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/101173**

| Patent document cited in search report | | | Publication date (day/month/year) | Patent family member(s) | Publication date (day/month/year) |
|---|---|---|---|---|---|
| CN | 116946136 | A | 27 October 2023 | None | |
| CN | 113103881 | A | 13 July 2021 | None | |
| CN | 114407673 | A | 29 April 2022 | None | |
| DE | 102011081709 | A1 | 28 February 2013 | None | |

Form PCT/ISA/210 (patent family annex) (July 2022)

**REFERENCES CITED IN THE DESCRIPTION**

**Patent documents cited in the description**

- CN 202310971225